# EUROPEAN PATENT SPECIFICATION

(11) **EP 2 519 041 B1**
(45) Date of publication and mention of the grant of the patent: **04.11.2015**
(21) Application number: 10844436.5
(22) Date of filing: 29.07.2010
(51) Int. Cl.: H04W 8/22, H04W 4/00, H04W 68/00, H04W 48/16

(54) **METHOD AND APPARATUS FOR ACQUIRING NETWORK STATE INFORMATION**
VERFAHREN UND VORRICHTUNG ZUR GEWINNUNG VON NETZWERKSTATUSINFORMATIONEN
PROCÉDÉ ET APPAREIL D'ACQUISITION D'INFORMATIONS D'ÉTAT DE RÉSEAU

(30) Priority: 28.01.2010 CN 201010103198
(43) Date of publication of application: 31.10.2012
(73) Proprietor: ZTE Corporation, Shenzhen, Guangdong 518057 (CN)
(72) Inventor: YANG, Feng, Shenzhen Guangdong 518057 (CN)
(74) Representative: Jansen, Cornelis Marinus
(86) International application number: PCT/CN2010/075556
(87) International publication number: WO 2011/091659

(56) References cited:
- EP-A1- 1 995 983
- EP-A1- 2 146 526
- EP-A2- 1 912 453
- CN-A- 101 790 153
- KR-A- 20070 047 884
- KR-A- 20080 094 349

## Description

### TECHNICAL FIELD

The present disclosure relates to a smart mobile terminal technology, and particularly to a method and an apparatus for acquiring network state information by a mobile terminal when after a cell state changes.

### BACKGROUND

A smart mobile terminal has been paid more and more attention in public due to its powerful functions, great operability and convenient installation of third-party software. The market prospect of a smart phone is increasingly wider. While the test of a Global Certification Forum (GCF) is an important test before commercialization of a Wideband Code Division Multiple Access (WCDMA) mobile terminal; wherein the test is to determine, when a network state of a cell where a mobile terminal is located changes, whether the mobile terminal can correctly sense a network state of a cell where the mobile terminal is located and write corresponding network state information into a Subscriber Identity Module (SIM) card. In the future, it can be understood as that whether network operators can write network information into a SIM card through a mobile terminal and to make a mobile terminal fully support an implementation trend of the separation of terminal software with customization.

EP 1995983 A1 discloses an apparatus and method capable of receiving network parameter information by using a SIM Application Toolkit (SAT) in a portable terminal. And EP 1912453 A2 discloses an apparatus and method for managing a tool kit menu of a portable terminal in a roaming condition.

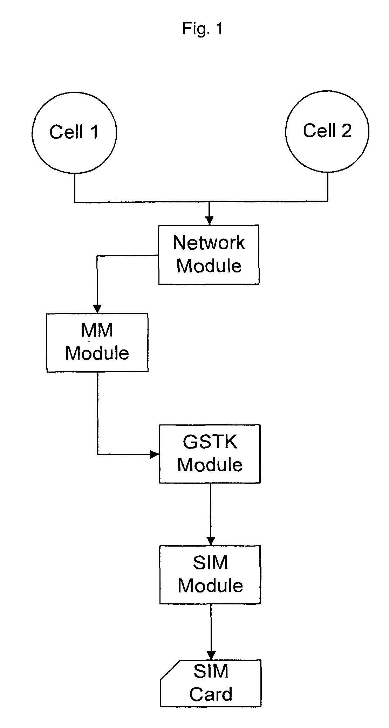

The present disclosure is based on an important test of a Global System for Mobile communications (GSM) general standard certification SIM card support capability ToolKit (STK). Takes an existing Qualcomm platform for example, Fig. 1 shows a schematic diagram of existing acquisition of network state information. As shown in Fig. 1, the process of acquiring a network state approximately includes: a Qualcomm SIM card support capability ToolKit (GSTK) module registers a network state to a Mobility Management (MM) module; the GSTK module processes, in a location where a MM_IDLE state changes, a network state command when a cell network is switched, then calls a Qualcomm interface and writes a changed network state into a SIM card through a SIM module.

However, in an actual network environment, a GSKT module cannot receive a change of a network state when the GSKT module processes, in a location where a corresponding MM_IDLE state changes, a network state command after a cell state changes, that is, the GSKT module cannot acquire changed network state information, thereby being incapable of correctly driving a SIM module to write a corresponding network state into a SIM card.

In the implementation process of the related technology, the existing method for acquiring network state information by a mobile terminal when a cell state changes cannot guarantee that a GSTK module will acquire correct network state information and update network state, which is correctly acquired after the cell changes, into a corresponding SIM card.

### SUMMARY

In view of this, a main object of the present disclosure is to provide a method and an apparatus for acquiring and storing changed network state information by a mobile terminal so as to acquire correct network state information and store the changed network state into a SIM card.

To achieve the above object, the technical solution of the present disclosure is realized as follows.

The present disclosure provides a method as defined in claim 1.

The method may further include, before the GSTK module registers the network state notification to the CM module: after a mobile terminal is powered and turned on, the CM module registers a call back function to a network module; when a network where a cell is located is searched out by the network module, the network module stores a current network state and notifies the CM module through the call back function; and when a state of a network where the mobile terminal is located changes, the network module stores a changed network state and notifies the CM module through the call back function.

In the above solution, the storing a current network state into a mobile terminal through a GSTK Envelop command may include: the GSTK module changes an acquired network state type into a cell location information change type, while calls a high Generic GSTK Envelop command processing function and writes corresponding network state information into a SIM card through a SIM module interface function.

In the above solution, the GSTK module registering the network state notification to the CM module may include: the GSTK module registers a call back function to the CM module to instruct the CM module to notify the GSTK module of a changed network state when a network state changes.

The present disclosure further provides an apparatus as defined in claim 4.

Wherein the apparatus may further include: a network module, configured, after a mobile terminal is powered and turned on, to receive a registered call back function from the CM module; to store a current network state and notify the CM module through the call back function when a network where a cell is located is searched out; and the CM module is further configured to send the registered call back function to the network module and receive a notification from the network module.

From the above technical solution, it can be seen that, in the present disclosure, a GSTK module registers a network state notification to a CM module and the CM module notifies the GSTK module when a network state recorded by the CM module changes. Since, a state reported by the CM module is always correct after every time a network state changes, so the GSTK module accurately senses a changed state of a current network module through the method of the present disclosure, thereby guarantying that a mobile terminal can acquire correct network state information.

Furthermore, through the method provided by the present disclosure of writing a changed network state of a network module into a SIM card, operators can know a changed state of a current network through the SIM card, thereby prompting future development of separating mobile terminal software and operator customization.

### BRIEF DESCRIPTION OF THE DRAWINGS

Fig. 1 is a schematic diagram showing existing acquisition of network state information;
Fig. 2 is a flowchart showing acquisition of network state information of the present disclosure; and
Fig. 3 is a schematic diagram showing an embodiment of acquisition of network state information of the present disclosure.

### DETAILED DESCRIPTION

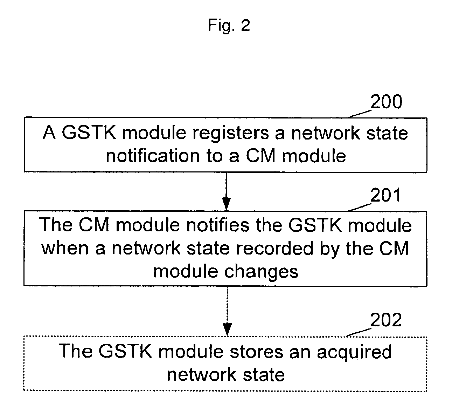

Fig. 2 is a flowchart showing acquisition of network state information of the present disclosure, as shown in Fig. 2, including the following steps.

Step 200: a GSTK module registers a network state notification to a CM module.

Herein, a state reported by the CM module is always correct at every time a network state changes, so that, in this step, the GSTK module can instruct, through registering a call back function to the CM module, the CM module to notify the GSTK module of a changed network state when the network state changes. The specific implementation of registering a call back function is a common technique for those skilled in the art, thereby needing no further description.

Before this step, the following steps are included: after a SIM card is inserted into a mobile terminal, the mobile terminal is located within network coverage of a cell and the mobile terminal is powered and turned on, a CM module registers a call back function to a network module, so as to allow the network module to provide a notification when a network state changes; when the network where the cell is located is searched out by the network module, the network module stores a current network state and notifies the CM module through the call back function; and when the mobile terminal moves to another cell, the network module stores a changed network state and notifies the CM module through the call back function that the network state changes.

Step 201: the CM module notifies the GSTK module when a network state recorded by the CM module changes, and the GSTK module acquires changed network state information.

Through the method of the present disclosure, the GSTK module can accurately sense a change of a current network module state, thereby guarantying that a mobile terminal can acquire correct network state information.

Furthermore, the method of the present disclosure includes Step 202: the GSTK module stores an acquired network state. Specifically, Step 202 may be that: after the GSTK module knows that the network state changes, the GSTK module stores a current network state into the mobile terminal through an existing GSTK Envelop command; that is, the GSTK module changes an acquired network state type into a cell location information change type, while calls a Qualcomm GSTK Envelop command processing function and writes corresponding network state information into the SIM card through a SIM module interface function.

In this step, how to store acquired network state information in detail belongs to a common technique of those skilled in the art, thereby needing no further description.

Through the method provided by the present disclosure for writing a changed network state of a network module into a SIM card, operators can know a changed state of a current network through a SIM card state, thereby prompting future development of the separation of mobile terminal software with operator customization.

According to the method of the present disclosure, an apparatus for acquiring network state information is further provided, the apparatus is arranged in a mobile terminal, and at least includes a CM module and a GSTK module, wherein,
the GSTK module is configured to register a network state notification to the CM module, receive a notification from the CM module, and acquire changed network state information; and
the CM module is configured to notify the GSTK module when a recorded network state changes.

The apparatus of the present disclosure further includes a network module; wherein the network module is configured, after a SIM card is inserted into a mobile terminal, the mobile terminal is within network coverage of a cell and the mobile terminal is powered and turned on, to receive a registered call back function from the CM module, to store a current network state and notify the CM module through the call back function when a network where a cell is located is searched out; and, accordingly, the CM module is further configured to send the registered call back function to the network module and receive a notification from the network module.

The GSTK module is further configured to store an acquired network state.

The apparatus of the present disclosure further includes a SIM module; wherein the SIM module is configured to write network state information from the GSTK into the SIM card through a SIM module interface function.

The GSTK is specifically configured to change an acquired network state type into a cell location information change type, call a Qualcomm GSTK Envelop command processing function and send corresponding network state information to the SIM module.

The present disclosure will be described below in detail with reference to the accompanying drawings and an embodiment.

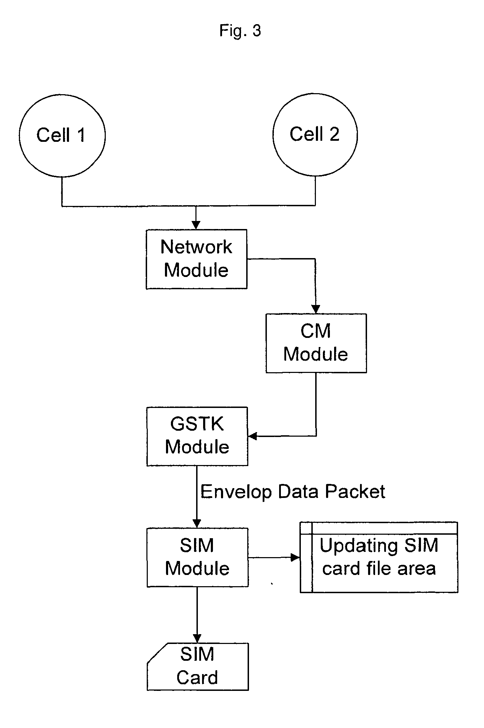

Fig. 3 is a schematic diagram showing an embodiment of acquiring network state information of the present disclosure. In this embodiment a Qualcomm 7225 platform GSTK module is taken as an example, as shown in Fig. 3, this embodiment includes the following processing.

First, a SIM card is inserted into a mobile terminal, and the mobile terminal is provided to be located within network coverage of cell 1. After the mobile terminal is powered and turned on, a CM module registers a call back function to a network module to allow the network module to notify after a network state changes; and a GSTK module registers a call back function to the CM module to request the CM module to notify after the CM module acquires a changed network state.

When the network where cell 1 is located is searched out by the network module, the network module stores a current network state and notifies the CM module through the call back function; the CM module notifies the GSTK module of an acquired network state through the call back function; and the GSTK module writes the current network state into the SIM card through an Envelop command.

Thereafter, it is assumed that a user moves the mobile terminal out of the network coverage of cell 1 and enters the network coverage of cell 2, at this time, the network signal from cell 1 received by the network module is reduced, but the network signal from cell 2 received by the network module is strengthened, then the network module analyzes and determines that the signal state of a current network changes, thereby stopping processing the network signal of cell 1 and turning to process the network signal of cell 2; the network module stores a changed network state and notifies the CM module through the call back function that the network state has changed; and, after the CM module knows that the network state changes, the CM module notifies the GSTK module through the call back function that the current network state changes.

Thus, the GSTK module senses that the network state changes, so that the GSTK module envelops network state related data into an Envelop data packet and processes through the SIM module by using a GSTK Envelop command; the SIM module finds a corresponding SIM card file area of the SIM card, writes the network related information in the network Envelop data packet into the corresponding SIM card file area, and updates the SIM card file area.

The method of the present disclosure compensates for processing defects of a GSTK module of the current platform, so that the GSTK module can accurately sense a change of a current network state. After a cell where a mobile terminal is located is switched from cell 1 to cell 2, a network module transmits a correct network state to the GSTK module through a CM module, so that the GSTK module can correctly sense a network state change of a cell where the mobile terminal is located and acquire the latest network state in the network module. Subsequently, the GSTK module writes the accurate network state information into a corresponding SIM card file area through a SIM module by using an Envelop command. Through the method of the present disclosure, the correctly storing a latest state of a current network into a SIM card is guaranteed.

The mentioned above is only preferred embodiments of the present disclosure and not intended to limit the protection scope of the present disclosure, and any modifications, equivalent replacements, improvements and the like shall fall within the protection scope of the present disclosure.

## Claims

1. A method for acquiring and storing changed network state information comprising:
registering (200), by a SIM card support capability ToolKit module, a network state notification to a Connectivity Management, CM, module; and
notifying (201) the SIM card support capability ToolKit module by the CM module when a network state recorded by the CM module changes, and acquiring changed network state information by the SIM card support capability ToolKit module;
storing (202) by the SIM card support capability ToolKit module an acquired network state after acquiring the changed network state information by the SIM card support capability ToolKit module **characterised in that**:
the storing (202) by the SIM card support capability ToolKit module an acquired network state comprises:
changing, by the SIM card support capability ToolKit module, an acquired network state type into a cell location information change type, while calling a SIM card support capability ToolKit Envelop command processing function and writing corresponding network state information into a SIM card through a SIM module interface function.

2. The method according to claim 1, further comprising:
before registering (200) by the SIM card support capability ToolKit module the network state notification to the CM module, registering by the CM module a call back function to a network module after a mobile terminal is powered and turned on; storing by the network module a current network state and notifying the CM module through the call back function when a network where a cell is located is searched out by the network module; and, storing by the network module a changed network state and notifying the CM module through the call back function when a state of a network where the mobile terminal is located changes.

3. The method according to claim 1, the registering (200) by a SIM card support capability ToolKit module a network state notification to a CM module comprises:
registering (200) by the SIM card support capability ToolKit module a call back function to the CM module to instruct the CM module to notify the SIM card support capability ToolKit module of a changed network state when a network state changes.

4. An apparatus for acquiring and storing changed network state information, comprising: a Connectivity Management, CM, module and a SIM card support capability ToolKit module, wherein
the SIM card support capability ToolKit module is configured to register (200) a network state notification to the CM module, receive a notification from the CM module, and acquire changed network state information; and
the CM module is configured to notify (201) the SIM card support capability ToolKit module when a recorded network state changes;
wherein the SIM card support capability ToolKit module is further configured to store (202) an acquired network state, and the apparatus further comprises: a SIM module, **characterised in that**:
the SIM module is configured to write network state information from the SIM card support capability ToolKit module into the SIM card through a SIM module interface function; and
the SIM card support capability ToolKit module is specifically configured to change an acquired network state type into a cell location information change type, call a SIM card support capability ToolKit Envelop command processing function and send corresponding network state information to the SIM module.

5. The apparatus according to claim 4, further comprising: a network module, configured, after a mobile terminal is powered and turned on, to receive a registered call back function from the CM module; to store a current network state and notify the CM module through the call back function when a network where a cell is located is searched out; and
the CM module is further configured to send the registered call back function to the network module and receive a notification from the network module.

## Patentansprüche

1. Verfahren zum Beschaffen und Speichern geänderter Netzwerkstatus-Informationen, umfassend:
Registrieren (200) einer Netzwerkstatus-Mitteilung durch ein SIM-Karten-Support-Fähigkeits-ToolKit-Modul bei einem Konnektivitäts-Management-CM-Modul; und
Mitteilen (201) dem SIM-Karten-Support-Fähigkeits-ToolKit-Modul durch das CM-Modul, wenn sich ein von dem CM-Modul aufgezeichneter Netzwerkstatus ändert, und Beschaffen geänderter Netzwerkstatus-Informationen durch das SIM-Karten-Support-Fähigkeits-TooIKit-Modul;
Speichern (202) eines beschafften Netzwerkstatus durch das SIM-Karten-Support-Fähigkeits-ToolKit-Modul nach dem Beschaffen der geänderten Netzwerkstatus-Informationen durch das SIM-Karten-Support-Fähigkeits-ToolKit-Modul; **dadurch gekennzeichnet, dass**:
das Speichern (202) eines beschafften Netzwerkstatus durch das SIM-Karten-Support-Fähigkeits-TooIKit-Modul umfasst:
Ändern eines beschafften Netzwerkstatus-Typs in einen Zell-Standort-Informations-Änderungs-Typ durch das SIM-Karten-Support-Fähigkeits-ToolKit-Modul, während eine SIM-Karten-Support-Fähigkeits-ToolKit-Envelop-Befehls-Verarbeitungs-Funktion aufgerufen wird und über eine SIM-Modul-Schnittstellenfunktion entsprechende Netzwerkstatus-Informationen in eine SIM-Karte geschrieben werden.

2. Verfahren gemäß Anspruch 1, ferner umfassend:
vor dem Registrieren (200) durch das SIM-Karten-Support-Fähigkeits-ToolKit-Modul der Netzwerkstatus-Mitteilung beim CM-Modul, Registrieren einer Rückruffunktion durch das CM-Modul bei einem Netzwerkmodul, nachdem ein mobiles Endgerät eingeschaltet und hochgefahren ist, Speichern eines aktuellen Netzwerkstatus durch das Netzwerk-Modul und dem CM-Modul durch die Rückruffunktion mitteilen, wenn ein Netzwerk, bei dem eine Zelle angeordnet ist, von dem Netzwerk-Modul ausgesucht wird; und Speichern eines geänderten Netzwerkstatus durch das Netzwerk-Modul und dem CM-Modul über die Rückruffunktion Mitteilen, wenn sich ein Status eines Netzwerk ändert, an dem das mobile Endgerät angeordnet ist.

3. Verfahren gemäß Anspruch 1, bei dem das Registrieren (200) einer Netzwerkstatus-Mitteilung durch ein SIM-Karten-Support-Fähigkeits-ToolKit-Modul bei einem CM-Modul umfasst:
Registrieren (200) einer Rückruffunktion durch das SIM-Karten-Support-Fähigkeits-ToolKit-Modul bei dem CM-Modul, um das CM-Modul anzuweisen, dem SIM-Karten-Support-Fähigkeits-ToolKit-Modul einen geänderten Netzwerkstatus mitzuteilen, wenn sich ein Netzwerkstatus ändert.

4. Vorrichtung zum Beschaffen und Speichern geänderter Netzwerkstatus-Informationen, umfassend: ein Konnektivitäts-Management-CM-Modul und ein SIM-Karten-Support-Fähigkeits-ToolKit-Modul, wobei
das SIM-Karten-Support-Fähigkeits-ToolKit-Modul dazu konfiguriert ist, bei dem CM-Modul eine Netzwerkstatus-Mitteilung zu registrieren (200), von dem CM-Modul eine Mitteilung zu empfangen und geänderte Netzwerkstatus-Informationen zu beschaffen; und
das CM-Modul dazu konfiguriert ist, dem SIM-Karten-Support-Fähigkeits-ToolKit-Modul mitzuteilen (201), wenn sich ein aufgezeichneter Netzwerkstatus ändert;
wobei das SIM-Karten-Support-Fähigkeits-TooIKit-Modul ferner dazu konfiguriert ist, einen beschafften Netzwerkstatus zu speichern (202), und die Vorrichtung ferner umfasst: ein SIM-Modul, **dadurch gekennzeichnet, dass**:
das SIM-Modul dazu konfiguriert ist, über eine SIM-Modul-Schnittstellen-Funktion Netzwerkstatus-Informationen von dem SIM-Karten-Support-Fähigkeits-ToolKit-Modul in die SIM-Karte zu schreiben; und
das SIM-Karten-Support-Fähigkeits-ToolKit-Modul spezifisch dazu konfiguriert ist, einen beschafften Netzwerkstatus-Typ in einen Zell-Standort-Informations-Änderungs-Typ zu ändern, eine SIM-Karten-Support-Fähigkeits-ToolKit-Envelop-Befehls-Verarbeitungs-Funktion aufzurufen und entsprechende Netzwerkstatus-Informationen an das SIM-Modul zu senden.

5. Vorrichtung gemäß Anspruch 4, ferner umfassend: ein Netzwerkmodul, das dazu konfiguriert ist, von dem CM-Modul eine registrierte Rückruffunktion zu empfangen, nachdem ein mobiles Endgerät eingeschaltet und hochgefahren ist; einen aktuellen Netzwerkstatus zu speichern und dem CM-Modul über die Rückruffunktion mitzuteilen, wenn ein Netzwerk ausgesucht wird, in dem eine Zelle angeordnet ist; und
das CM-Modul ferner dazu konfiguriert ist, die registrierte Rückruffunktion an das Netzwerkmodul zu senden und von dem Netzwerkmodul eine Mitteilung zu empfangen.

## Revendications

1. Méthode d'acquisition et de stockage d'informations d'état de réseau changé, comprenant :
l'enregistrement (200), par un module de boîte à outils de capacité de support de carte SIM, d'une notification d'état de réseau à un module de gestion de connectivité, CM ; et
la notification (201) au module de boîte à outils de capacité de support de carte SIM par le module CM quand un état de réseau enregistré par le module CM change et l'acquisition d'informations d'état de réseau changé par le module de boîte à outils de capacité de support de carte SIM ;
le stockage (202) par le module de boîte à outils de capacité de support de carte SIM d'un état de réseau acquis après l'acquisition des informations d'état de réseau changé par le module de boîte à outils de capacité de support de carte SIM, **caractérisée en ce que** :
le stockage (202) par le module de boîte à outils de capacité de support de carte SIM d'un état de réseau acquis comprend :
le changement, par le module de boîte à outils de capacité de support de carte SIM, d'un type d'état de réseau acquis en un type de changement d'informations de position de cellule, tout en appelant une fonction de traitement de commande d'enveloppe de boîte à outils de capacité de support de carte SIM et en écrivant des informations d'état de réseau correspondantes dans une carte SIM par le biais d'une fonction d'interface de module SIM.

2. Méthode selon la revendication 1, comprenant en outre :
avant l'enregistrement (200) par le module de boîte à outils de capacité de support de carte SIM de la notification d'état de réseau au module CM, l'enregistrement par le module CM d'une fonction de rappel à un module de réseau après qu'un terminal mobile est alimenté et allumé ; le stockage par le module de réseau d'un état de réseau actuel et la notification au module CM par le biais de la fonction de rappel quand un réseau où est située une cellule est recherché par le module de réseau ; et le stockage par le module de réseau d'un état de réseau changé et la notification au module CM par le biais de la fonction de rappel quand un état d'un réseau où est situé le terminal mobile change.

3. Méthode selon la revendication 1, l'enregistrement (200) par un module de boîte à outils de capacité de support de carte SIM d'une notification d'état de réseau à un module CM comprend :
l'enregistrement (200) par le module de boîte à outils de capacité de support de carte SIM d'une fonction de rappel au module CM pour donner instruction au module CM de notifier au module de boîte à outils de capacité de support de carte SIM un état de réseau changé quand un état de réseau change.

4. Appareil d'acquisition et de stockage d'informations d'état de réseau changé, comprenant un module de gestion de connectivité, CM, et un module de boîte à outils de capacité de support de carte SIM, dans lequel
le module de boîte à outils de capacité de support de carte SIM est configuré pour enregistrer (200) une notification d'état de réseau au module CM, recevoir une notification en provenance du module CM et acquérir des informations d'état de réseau changé ; et
le module CM est configuré pour notifier (201) au module de boîte à outils de capacité de support de carte SIM quand un état de réseau enregistré change ; dans lequel le module de boîte à outils de capacité de support de carte SIM est configuré en outre pour stocker (202) un état de réseau acquis, et l'appareil comprend en outre : un module SIM, **caractérisé en ce que** :
le module SIM est configuré pour écrire des informations d'état de réseau en provenance du module de boîte à outils de capacité de support de carte SIM dans la carte SIM par le biais d'une fonction d'interface de module SIM ; et
le module de boîte à outils de capacité de support de carte SIM est spécifiquement configuré pour changer un type d'état de réseau acquis en un type de changement d'informations de position de cellule, appeler une fonction de traitement de commande d'enveloppe de boîte à outils de capacité de support de carte SIM et envoyer des informations d'état de réseau correspondantes au module SIM.

5. Appareil selon la revendication 4, comprenant en outre : un module de réseau configuré pour, après qu'un terminal mobile est alimenté et allumé, recevoir une fonction de rappel enregistrée à partir du module CM ; stocker un état de réseau actuel et notifier au module CM par le biais de la fonction de rappel quand un réseau où est située une cellule est recherché ; et
le module CM est configuré en outre pour envoyer la fonction de rappel enregistrée au module de réseau et recevoir une notification à partir du module de réseau.
